(19) Europäisches Patentamt
European Patent Office
Office européen des brevets

(11) EP 0 855 431 A1

(12) **DEMANDE DE BREVET EUROPEEN**

(43) Date de publication:
**29.07.1998 Bulletin 1998/31**

(21) Numéro de dépôt: **98400032.3**

(22) Date de dépôt: **09.01.1998**

(51) Int Cl.6: **C08L 77/00**, C08L 77/06, C08L 77/12, C08J 3/00 // (C08L77/00, 35:06), (C08L77/12, 35:06)

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **22.01.1997 FR 9700636**

(71) Demandeur: **ELF ATOCHEM S.A.**
**92800 Puteaux, Hauts-de-Seine (FR)**

(72) Inventeurs:
- **Melot, Denis**
**27300 Bernay (FR)**
- **Bouilloux, Alain**
**27300 Bernay (FR)**
- **Ernst, Benoît**
**27170 Beaumont-le-Rocher (FR)**

(74) Mandataire: **Neel, Henry et al**
**DCRD/DPI,**
**Cours Michelet,**
**La Défense 10**
**92091 Paris La Défense Cedex (FR)**

(54) **Melange de polymère à blocs polyamides et de copolymères à motifs vinylaromatiques et motifs anhydride**

(57) La présente invention concerne un mélange de polymères (A) à blocs polyamides et de copolymères (B) comprenant des motifs vinylaromatiques et des motifs anhydride d'acide carboxylique insaturé, la quantité de (B) étant suffisante pour que l'indice de fluidité (ou Melt Flow Index MFi) du mélange de (A) et (B) soit inférieur à l'indice de fluidité de (A) seul.

Elle concerne aussi des mélanges maîtres de (A) et (B).



Printed by Jouve, 75001 PARIS (FR)

## Description

La présente invention concerne des mélanges de polymères (A) à blocs polyamides et de copolymères à motifs vinylaromatiques et des motifs anhydride d'acide carboxylique. Elle concerne plus particulièrement les polymères constitués de blocs polyamides et de blocs polyéther. Ces polymères sont parfois trop fluides au cours de leur extrusion, la demanderesse a découvert que l'ajout de quelques pourcents de copolymère du styrène et de l'anhydride maléique (SMA) permettait de contrôler la viscosité et le melt strengh.

La demanderesse a aussi découvert que pour de plus grandes proportions de SMA, il y avait une baisse de la viscosité ce qui permettait de préparer des mélanges maîtres de polymères à blocs polyamides et blocs polyéther et de SMA. Il suffit ensuite d'ajouter ces mélanges maîtres dans le polymère à blocs polyamide et blocs polyéther pour obtenir des polymères à viscosité contrôlée.

L'art antérieur US 5 126 407 décrit des mélanges comprenant :

- 85 à 65 parties de polyamide -6,6 ;
- 15 à 30 parties d'un copolymère de l'éthylène et de l'acide acrylique en proportions 90/10 neutralisé à 70 % par du zinc ;
- 0,1 à 3 parties d'un copolymère styrène -anhydride maléique.

Les exemples comparatifs montrent que la présence du copolymère styrène-anhydride maléique est nécessaire pour obtenir un melt strengh suffisant et pouvoir souffler les alliages du PA-6,6 et du copolymère éthylène-acide acrylique neutralisé et les transformer en corps creux.

US 5 122 570 est semblable à l'art antérieur précédent sauf que le copolymère éthylène-acide acrylique neutralisé est remplacé par un mélange de polyéthylène et de polyéthylène greffé.

US 4 966 941 décrit des mélanges comprenant :

90 à 65 parties de polyamide-6,6
10 à 30 parties soit de copolymère éthylène-acide acrylique neutralisé à 70 % par du zinc soit d'un mélange de polyéthylène et de polyéthylène greffé
0,1 à 3 parties d'un copolymère styrène-anhydride maléique
0,1 à 30 parties de fibres d'un polymère fluoré

Les exemples comparatifs montrent que la présence du copolymère styrène-anhydride maléique et des fibres du polymère fluoré est nécessaire pour pouvoir souffler les alliages du polyamide avec soit le copolymère éthylène-acide acrylique neutralisé soit le polyéthylène et le polyéthylène greffé et les transformer en corps creux.

EP 624 623 décrit des films constitués d'un mélange de 45 parties d'un copolymère styrène anhydride maléique de masse $\overline{Mw}$ 110000 éventuellement imidisé et de 55 parties d'un copolymère à blocs polyamides et blocs polyéther. Ces films résistent à des pliages répétés.

L'art antérieur n'a pas décrit le problème technique de la présente invention.

La présente invention concerne des mélanges de polymères (A) à blocs polyamides et de copolymères (B) comprenant des motifs vinylaromatiques et des motifs anhydride d'acide carboxylique, la quantité de (B) étant suffisante pour que l'indice de fluidité (ou Melt Flow Index MFi) du mélange de (A) et (B) soit inférieur à l'indice de fluidité de (A) seul.

Les quantités de (B) dépendent de la nature de (A) et des fonctions anhydride de (B), à titre d'exemple la quantité de (B) peut être de 1 à 5 parties (en poids pour respectivement 99 à 95 parties de (A). (sauf indication contraire, dans la suite du texte les parties sont en poids).

La présente invention concerne aussi un procédé pour préparer ces mélanges de (A) et (B) consistant à ajouter dans (A) un mélange maître de (A) et (B) c'est-à-dire un mélange riche en (B). L'invention concerne aussi ces mélanges maîtres. La demanderesse a découvert qu'en ajoutant le copolymère (B) dans le polymère (A) à de faibles teneurs, on observait une baisse de l'indice de fluidité et un melt strengh permettant d'extruder et de mettre en forme le polymère (A) et qu'en continuant d'ajouter du copolymère (B), on observait l'effet inverse, c'est-à-dire à nouveau une augmentation de l'indice de fluidité.

Un autre avantage de l'invention est que la transparence du polymère (A) n'est pas altérée par la présence de (B), les polymères à blocs polyamides (A) peuvent contenir des blocs polyester, polyéther,.... L'invention concerne particulièrement les polymères à blocs polyamides et blocs polyéther.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes

dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en polyamide-6.

La masse molaire en nombre $\overline{M_n}$ des séquences polyamides est comprise entre 300 et 15 000 et de préférence entre 600 et 5 000. La masse $\overline{M_n}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyéthylène glycol, du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient plusieurs motifs différents tels que des motifs dérivés de l'éthylène glycol, du propylène glycol ou encore du tétraméthylène glycol.

De préférence, le polymère à blocs polyamides et blocs polyéther comprend un seul type de bloc polyamide et un seul type de blocs polyéther. On utilise avantageusement des polymères à blocs PA-12 et des polymères à blocs PA-6.

On peut aussi utiliser un mélange de deux ou plusieurs polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 1/1 à 3/1.

Des exemples de vinylaromatiques sont le styrène, l'alphaméthylstyrène et des dérivés du styrène par substitution du noyau aromatique. Ces substituants peuvent être des halogènes et des groupes alkyles ayant de 1 à 8 atomes de carbone. Des exemples de vinylaromatiques substitués peuvent être le p-méthylstyrène, l'éthylstyrène, le p-t-butylstyrène, l'o-chlorostyrène et le p-chlorostyrène.

Le copolymère (B) peut comprendre plusieurs vinylaromatiques. L'anhydride d'acide carboxylique insaturé peut être choisi parmi l'anhydride maléique, l'anhydride itaconique, l'anhydride citraconique, l'anhydride méthylmaléique et l'anhydride chloromaléique. Les fonctions anhydride peuvent être en partie ou en totalité estérifiées par un alcool, neutralisées par une base ou imidisées par une amine, de l'ammoniac ou l'aniline.

Avantageusement, la masse molaire en poids $\overline{Mw}$ du copolymère (B) est inférieure à 10 000 et de préférence comprise entre 1 000 et 5 000. Ce rapport de la quantité de monomère vinylaromatique sur la quantité d'anhydride est en mole avantageusement compris entre 0,5 et 5 et de préférence entre 1 et 3.

Des copolymères (B) particulièrement préférés sont les copolymères styrène-anhydride maléique (SMA) de

formule :

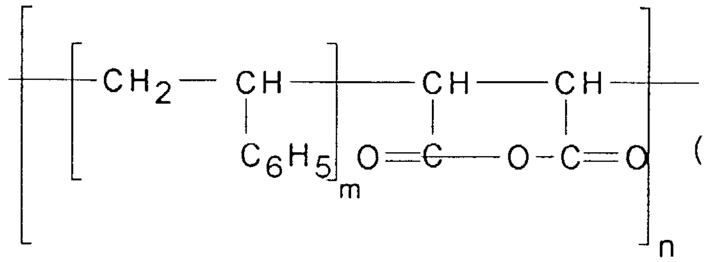 (1)

dans laquelle m vaut 1, 2 ou 3 et n vaut 6,7 ou 8. Les SMA peuvent être partiellement estérifiés.

La quantité du copolymère (B) peut être comprise entre 1 et 8 parties (en poids) pour respectivement 99 à 92 parties du polymère (A) et de préférence 1 à 3 parties.

La présente invention est particulièrement utile pour baisser le melt index des polymères (A) à blocs polyamide 12 et blocs PTMG des polymères (A) à blocs polyamide-6 et blocs PTMG des polymères (A) à blocs PA-6 et blocs PEG ainsi que des polymères (A) à blocs PA-12 et blocs PEG.

Il suffit d'ajouter le copolymère (B) dans le polymère (A) et de faire un mélange à sec avant de l'extruder. Cependant, il est beaucoup plus simple d'ajouter un mélange maître de (A) et (B) dans (A). La présente invention concerne aussi ces mélanges maîtres. La demanderesse a en effet découvert qu'il existait une valeur ou plus exactement une plage au-delà de laquelle le copolymère (B) avait un effet fluidifiant. Cette valeur ou cette plage est fonction de la nature de (A) et (B). Elle est de l'ordre de 10 à 15 parties de (B) pour 90 à 85 parties de (A). Avantageusement, les mélanges maîtres de l'invention comprennent 15 à 30 parties du copolymère (B) pour respectivement 85 à 70 parties du polymère (A).

Des mélanges maîtres particulièrement préférés par la demanderesse sont ceux dans lesquels le polymère (A) a des blocs en PA-6 ou PA-12 et des blocs en PTMG ou en PEG et le copolymère (B) est un SMA de formule (1).

On effectue la modification du polymère (A) pour rendre sa mise en oeuvre plus aisée en y ajoutant le copolymère (B) sous forme du mélange maître cité plus haut. Il suffit d'effectuer le mélange à sec des granulés de (A) et du mélange maître de (A) et (B). Le polymère (A) ainsi modifié s'extrude plus facilement, on observe une meilleure tenue du melt (Melt strengh), il est aussi plus facile de le transformer en film que ce soit par extrusion soufflage d'une bulle ou en cast.

La présente invention concerne aussi la modification de mélanges comprenant des polymères (A) et au moins un polymère (C). Ces polymères (C) peuvent être par exemple des polyoléfines, des copolymères d'éthylène et d'acétate de vinyle ou de (méth)acrylate d'alkyle, des copolymères blocs SBS (styrène-butadiène-styrène), SIS (styrène-isoprène-styrène), ces copolymères blocs pouvant être hydrogénés. Ces polymères (C) peuvent aussi être fonctionnalisés par greffage ou copolymérisation. Ces mélanges comprennent avantageusement jusqu'à 50 parties de (C) de préférence 5 à 35 parties pour respectivement 95 à 65 parties de (A). De tels mélanges sont décrits dans EP 688 826 et EP 737 709.

On a observé une augmentation de la pression lors de l'extrusion de tubes en polymère (A) modifiés par (B) par rapport à l'extrusion de tubes en seul polymère (A).

On a aussi observé une bonne stabilité lors de l'extrusion de films constitués de (A) et (C) et comprenant 1 à 3 % de (B). La présence de (B) évite en particulier l'instabilité du film sur les bords des rouleaux des machines en cast (à détailler....) cette instabilité se traduit par des déplacements du film en sinusoïde (Waving). Les mélanges de polymères (A) et (B) ou (A), (B) et (C) peuvent contenir des additifs tels que des antioxydants, anti UV, des agents glissants, des ignifugeants, des charges.

***<u>Exemples</u>***

On a utilisé les produits suivants :

**<u>PEBAX 1</u>** : polymères à blocs PA-6 de masse $\overline{M_n}$ = 2600 et blocs PTMG de masse $\overline{M_n}$ 650 ayant une dureté shore D 63.

**<u>PEBAX 2</u>** : polymère à blocs PA-12 de masse $\overline{M_n}$ 4000 et blocs PTMG de masse $\overline{M_n}$ 1000 ayant une dureté shore D 63.

**PEBAX 3** : polymère à blocs PA-6 de masse $\overline{M_n}$ 1000 et blocs PTMG de masse $\overline{M_n}$ 1000 ayant une dureté shore D 40.

**PEBAX 4** : polymère à blocs PA-6 de masse $\overline{M_n}$ 1300 et blocs PTMG de masse $\overline{M_n}$ 650 ayant une dureté shore D : 55.

**SMA 2** désigne un copolymère styrène-anhydride maléique en partie estérifé. Il est défini dans le tableau 6.

**MM 20 % SMA 2** désigne un mélange maître comprenant 20 parties en poids de SMA 2 et 80 parties de PEBAX 3. Il est réalisé sur une machine BUSS de longueur 15 D à 35 tours/mn selon le profil de temps : 210-215-220-205-205.

Les tableaux 1-2-3 concernent l'influence du taux de SMA 2 sur le MFI (235° C, 1 kg diamètre 2 mm ; ASTM D1238) des PEBAX 1, 2 et 3. Les différents échantillons ont été réalisés par mélange à sec du PEBAX avec le SMA sous sa forme poudre, puis ces mélanges ont été introduits dans une extrudeuse LEISTRITZ de longueur de vis 34 D à 75 tours/mn avec le profil de température suivant : 220-210-210-205-200-200-200-200-200.

Dans ces tableaux, C. Variation signifie l'écart-type de la mesure, et Humidité % signifie le taux d'humidité des granulés mesuré par Karl Fisher.

Tableau 1:

| Pébax 1 | SMA2 | MFI | C.Variation | Humidité |
|---|---|---|---|---|
| (% poids) | (% poids) | (g/10mn) | | (%) |
| 100 | 0 | 8.39 | 1 | 0.033 |
| 99 | 1 | 4.62 | 0.6 | 0.028 |
| 97 | 3 | 4.17 | 1.8 | 0.028 |
| 95 | 5 | 4.09 | 0.8 | 0.031 |
| 92.9 | 7.1 | 4.21 | 0.6 | 0.022 |
| 90.2 | 9.8 | 5.46 | | 0.039 |

Tableau 2 :

| Pébax 2 | SMA 2 | MFI | C.Variation | Humidité |
|---|---|---|---|---|
| (% poids) | (% poids) | (g/10mn) | | (%) |
| 100 | 0 | 5.31 | 0.9 | 0.019 |
| 99 | 1 | 4.29 | 0.3 | 0.025 |
| 97 | 3 | 4.65 | 0.7 | 0.023 |
| 95 | 5 | 5.23 | 0.3 | 0.027 |
| 92.7 | 7.3 | 6.33 | 2.2 | 0.035 |
| 90 | 10 | 7.84 | 2.5 | 0.032 |

Tableau 3 :

| Pébax 3 | SMA 2 | MFI | C.Variation | Humidité |
|---|---|---|---|---|
| (% poids) | (% poids) | (g/10mn) | | (%) |
| 100 | 0 | 10.66 | 1.1 | |
| 98.9 | 1.1 | 6.94 | 0.8 | 0.059 |
| 97.2 | 2.8 | 6.48 | 1.4 | |
| 94.4 | 5.6 | 7.38 | 0.3 | 0.059 |

Tableau 3 : (suite)

| Pébax 3 | SMA 2 | MFI | C.Variation | Humidité |
|---|---|---|---|---|
| (% poids) | (% poids) | (g/10mn) | | (%) |
| 92.8 | 7.2 | 9.74 | 0.8 | |
| 90.1 | 9.9 | 10.57 | 2.4 | |

Ces résultats de MFI mettent en évidence l'effet viscosifiant du SMA sur différents grades de PEBAX pour des taux très faibles compris entre 1 et 3 % en poids. De plus, au-delà de 5 % introduit, nous notons un effet fluidifiant du SMA sur la viscosité à l'état fondu des PEBAX. Ceci est un point important car c'est ce qui nous permet par la suite de réaliser des mélanges maîtres PEBAX-SMA facilement redispersables dans la matrice PEBAX en dry blend lors du compoundage ou de la mise en oeuvre.

Les tableaux 4 et 5 illustrent l'utilisation d'un mélange-maître à base SMA pour modifier la rhéologie à l'état fondu du PEBAX. Le mélange-maître est introduit dans le PEBAX en mélange à sec puis le mélange résultant est extrudé sur la même LEITSTRITZ avec le même profil que dans les tableaux 1 à 3.

Le MFi est mesuré comme dans les tableaux 1-3.

Tableau 4

| Pébax 4 | MM20% | MFI | C.Variation | Humidité |
|---|---|---|---|---|
| (% poids) | SMA 2 | g/10 mm | (%) | (%) |
| 100 | - | 12.89 | 0.6 | |
| 95 | 5 | 7.43 | 0.7 | 0.059 |
| - | 100 | 28.76 | 0.1 | 0.06 |

Tableau 5

| Pébax 1 | MM20% | MFI | C.Variation | Humidité |
|---|---|---|---|---|
| (%) | SMA 2 | (g/10 mn) | (%) | (%) |
| 100 | - | 9.5 | 0.7 | 0.02 |
| 95 | 5 | 5.09 | 0.5 | 0.05 |
| - | 100 | 12.28 | 0.11 | 0.06 |

Le tableau 7 compare l'efficacité de divers types de SMA estérifiés ou non et de masse moléculaire différente (dont les caractéristiques sont reportées dans le tableau 6) sur la rhéologie du PEBAX 4. On peut aussi noter que des masses moléculaires élevées ne permettent pas l'obtention des propriétés désirées, en particulier en termes de transparence.

Les SMA sont introduits soit purs soit sous forme de mélange maîtres, mélangés en dry blend avec le PEBAX puis extrudés sur une ZSK Brabender.

Tableau 6 :

| Types de SMA utilisés | | | | | | |
|---|---|---|---|---|---|---|
| | Mn(1) | Tf(°C)(2) | Tg(°C)(2) | Indice d'acide(3) | % AM(3) | % estérifié(3) |
| SMA1 | 1700 | 140-160 | 124 | 335-375 | 33.5 | |
| SMA2 | 1900 | 135-150 | 110 | 232 | 13.6 | 53 |
| SMA3 | 49000 | 218-288 | | | 7.1(4) | |

(1) Mesure par GPC en équivalent polystyrène

(2) Mesuré par DSC

(3) Mesuré par méthode ATO8130 (potentiométrie)

(4) Mesuré par potentiométrie

Tableau 7 :

| Comparaison de divers types de SMA sur la rhéologie et la transparence du Pébax 4. | | | | | | |
|---|---|---|---|---|---|---|
| PEBAX 4 | %MMSMA2 (3) | %MMSMA1 (3) | %SMA3 (4) | MFI (5) | Tranparence (6) | Indice d'opacité (7) |
| 100(1) | | | | 7.59 | 16.2 | |
| 95(1) | 5 | | | 4.35 | 16.25 | |
| 85(1) | 15 | | | 5.89 | 19 | |
| (1) | 100 | | | 23.45 | 19 | |
| 95(1) | | 5 | | 5.31 | 16.2 | 25 |
| 85(1) | | 15 | | 6.47 | 18.6 | 25 |
| (1) | | 100 | | 24.70 | 18.2 | 25 |
| 100(2) | | | | 6.27 | 14.3 | 25 |
| 90(2) | | | 10 | 4.8 | * | 80 |
| 80(2) | | | 20 | 3.2 | * | 90 |

(1) Melanges réalisés sur ZKS Brabender; Profil de temp. : 180-200-200; vitesse de vis : 60 tr/min
(2) Mélanges réalisés sur ZKS Brabender; profil de temp. : 230-240-250; vitesse de vis : 60 tr/min
(3) Mélange maitre à 20% de SMA réalisé sur Buss 15D; vitesse vis : 35tr/mn; profil temp. : 210-215-220-205-205
(4) SMA pur introduit en dry blend
(5) Melt Flow Index g/10mn, 235°C sous 1kg; diamètre 2mm; ASTMD 1238
(6) % de lumière transmise sur plaques de 2mm à 560nm ASTMD 1003
(7) Méthode interne E1f Atochem; plus l'indice est élevé, plus l'échantillon est opaque
* Echantillons opaques

## Revendications

1. Mélanges de polymères (A) à blocs polyamides et de copolymères (B) comprenant des motifs vinylaromatiques et des motifs anhydride d'acide carboxylique insaturé, la quantité de (B) étant suffisante pour que l'indice de fluidité (ou Melt Flow Index MFi) du mélange de (A) et (B) soit inférieur à l'indice de fluidité de (A) seul.

2. Mélanges selon la revendication 1 dans lesquels le polymère (A) est un polymère à blocs polyamides et blocs polyétherdiol.

3. Mélanges selon la revendication 2 dans lesquels les blocs polyamides de (A) sont en polyamide-6 ou en polyamide-12 et les blocs polyéthers sont en polyéthylène glycol (PEG) ou en polytétraméthylène glycol (PTMG).

4. Mélanges selon l'une quelconque des revendications dans lesquels (B) est un copolymère styrène-anhydride maléique pouvant être en tout ou partie estérifié par un alcool, neutralisé par une base ou imidisé par une amine ou de l'ammoniac.

5. Mélanges selon l'une quelconque des revendications précédentes dans lesquels la quantité de (B) est de 1 à 8 parties pour respectivement 99 à 92 parties de (A).

6. Mélanges selon l'une quelconque des revendications précédentes dans lesquels se trouve aussi au moins un polymère (C) choisi parmi les polyoléfines, les copolymères d'éthylène et d'acétate de vinyle ou de (méth)acrylate d'alkyle, les copolymères blocs SBS, SIS, ces copolymères blocs pouvant être hydrogénés, le polymère (C) pouvant être fonctionnalisé par greffage ou copolymérisation.

7. Mélanges maîtres de polymères (A) et de copolymères (B).

8. Mélanges maîtres selon la revendication 7 comprenant 15 à 30 parties de (A) pour 85 à 70 parties de (B).

Office européen des brevets

# RAPPORT DE RECHERCHE EUROPEENNE

Numéro de la demande
EP 98 40 0032

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.6) |
| A | PATENT ABSTRACTS OF JAPAN<br>vol. 009, no. 138 (C-286), 13 juin 1985<br>& JP 60 023435 A (TORAY KK), 6 février 1985,<br>* abrégé *<br>--- | | C08L77/00<br>C08L77/06<br>C08L77/12<br>C08J3/00<br>//(C08L77/00, 35:06), (C08L77/12, 35:06) |
| D,A | EP 0 624 623 A (DSM NV) 17 novembre 1994<br>--- | | |
| A | DATABASE WPI<br>Section Ch, Week 8333<br>Derwent Publications Ltd., London, GB;<br>Class A23, AN 83-738923<br>XP002042784<br>& JP 58 117 250 A (ASAHI DOW LTD) , 12 juillet 1983<br>* abrégé *<br>--- | | |
| A | DATABASE WPI<br>Section Ch, Week 8546<br>Derwent Publications Ltd., London, GB;<br>Class A13, AN 85-286265<br>XP002042785<br>& JP 60 195 157 A (MITSUBISHI CHEM IND LTD) , 3 octobre 1985<br>* abrégé *<br>--- | | DOMAINES TECHNIQUES RECHERCHES (Int.Cl.6) |
| A | PATENT ABSTRACTS OF JAPAN<br>vol. 010, no. 208 (C-361), 22 juillet 1986<br>& JP 61 051049 A (TOA NENRYO KOGYO KK), 13 mars 1986,<br>* abrégé *<br>--- | | C08L<br>C08J |
| A | EP 0 003 126 A (ROHM & HAAS) 25 juillet 1979<br>----- | | |

Le présent rapport a été établi pour toutes les revendications

| Lieu de la recherche | Date d'achèvement de la recherche | Examinateur |
|---|---|---|
| LA HAYE | 27 avril 1998 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)